# EUROPEAN PATENT SPECIFICATION

(11) **EP 4 089 648 B1**
(45) Date of publication and mention of the grant of the patent: **06.05.2026**
(21) Application number: 22164698.7
(22) Date of filing: 28.03.2022
(51) Int. Cl.: G06V 20/56, G06V 10/44, G06V 10/62, G06T 7/246, G06T 7/12

(54) **LANE EDGE EXTRACTION METHOD AND APPARATUS, AUTONOMOUS DRIVING SYSTEM, VEHICLE, AND STORAGE MEDIUM**
VERFAHREN UND VORRICHTUNG ZUR FAHRBAHNRANDEXTRAKTION, AUTONOMES FAHRSYSTEM, FAHRZEUG UND SPEICHERMEDIUM
PROCÉDÉ ET APPAREIL D'EXTRACTION DE BORD DE VOIE, SYSTÈME DE CONDUITE AUTONOME, VÉHICULE ET SUPPORT DE STOCKAGE

(30) Priority: 10.05.2021 CN 202110505759
(43) Date of publication of application: 16.11.2022
(73) Proprietor: Nio Technology (Anhui) Co., Ltd, Hefei City, Anhui 230601 (CN)
(72) Inventor: LIN, Binbin, Anhui, 230611 (CN)
(74) Representative: Vossius & Partner Patentanwälte Rechtsanwälte mbB

(56) References cited:
- WO-A1-2020/154967
- CN-A- 109 977 776
- CN-B- 106 447 730
- HU JIANJUN ET AL: "Research on Lane Detection Based on Global Search of Dynamic Region of Interest (DROI)", APPLIED SCIENCES, vol. 10, no. 2543, 7 April 2020 (2020-04-07), pages 1 - 22, XP055960471, DOI: 10.3390/app10072543

## Description

### Technical Field

This application relates to the field of visual control for vehicles, and in particular, to a lane edge extraction method, a lane edge extraction apparatus, an autonomous driving system, a vehicle, and a computer-readable storage medium.

### Background Art

Computer vision processing technology is increasingly applied in the field of vehicle driving. At present, functions such as lateral control for driver assistance are highly dependent on the quality of lane lines on a road. When information about lane lines is inaccurate due to blurred road signs, accumulated water and snow on a road, etc., driver assistance may hardly control the direction of a vehicle correctly. The above common scenarios limit the application range of vehicle driving assistance, and also easily lead to dangers during an application process. By means of existing visual identification, a drivable space of a vehicle can be provided. However, data is relatively primitive in structure, and the data is noisy and has a large error. Therefore, although making no difference to suppression and warning of a function, the data may raise many risks if being directly used for route planning and control. CN109 977 776 A directs to a lane detection method, which includes the steps of: fitting lane line pixel points extracted from images acquired by image sensor to obtain a lane line; predicting a lane line of the image based on the tracked lane line and the vehicle information; matching the fitted lane lines to the predicted lane lines; if matched, splicing the fitted lane line with the tracked lane line.

"Research on Lane Detection Based on GlobalSearch of Dynamic Region of Interest (DROI)" by Hu Jianjun ET AL, Applied Sciences, relates to a lane detection approach based on the dynamic region of interest (DROI) selection in the horizontal and vertical safety vision.

WO 2022/154967 A1 relates to system identifies a road to be navigated by an ADV, the road being captured by one or more point clouds from one or more LIDAR sensors.

CN 106 447 730 B relates to a parameter estimation method, a parameter estimation apparatus and electronic equipment for estimating the position coordinates of the vanishing line in the current frame of image acquired by the imaging device, with higher precision.

### Summary of the Invention

Embodiments of this application provide a lane edge extraction method, a lane edge extraction apparatus, an autonomous driving system, a vehicle, and a computer-readable storage medium, which are used for improving the stability and accuracy of lane edge extraction.

The subject-matter of the present invention is defined by the features of the independent claims. Further preferred embodiments of the present invention are defined in the dependent claims. In particular, according to an aspect of this application, a lane edge extraction method is provided, the method including: receiving tracking edge points, about lane edges, of an immediately preceding frame of an edge image sequence; determining observation edge points, about the lane edges, of a current frame of the edge image sequence; obtaining temporary tracking edge points of the current frame by continuing the tracking edge points of the immediately preceding frame with the observation edge points of the current frame and correcting the tracking edge points of the immediately preceding frame based on the observation edge points of the current frame; fitting a lane edge curve based on the temporary tracking edge points; and excluding outliers from the temporary tracking edge points based on the lane edge curve, to form tracking edge points of the current frame, wherein it is determined that a point is a part of the outliers if a distance between the point in the temporary tracking edge points and the lane edge curve is greater than a preset value, wherein tracking edge points of a first frame of the edge image sequence are observation edge points of the first frame. The obtaining temporary tracking edge points of the current frame by continuing the tracking edge points of the immediately preceding frame with the observation edge points of the current frame and correcting the tracking edge points of the immediately preceding frame based on the observation edge points of the current frame comprise: determining current positions of the tracking edge points of the immediately preceding frame and the observation edge points of the current frame in the vehicle rectangular coordinate system; continuing, in the vehicle rectangular coordinate system, a non-coincident part of the observation edge points of the current frame and the tracking edge points of the immediately preceding frame, to obtain a part of the temporary tracking edge points; mapping a coincident part of the observation edge points of the current frame and the tracking edge points of the immediately preceding frame into the vehicle polar coordinate system, and correcting the tracking edge points of the immediately preceding frame by using the observation edge points of the current frame in the coincident part, to obtain a remaining part of the temporary tracking edge points; mapping the remaining part of the temporary tracking edge points into the vehicle rectangular coordinate system; and combining the part of the temporary tracking edge points and the remaining part of the temporary tracking edge points to form the temporary tracking edge points.

In some embodiments of this application, optionally, the determining current positions of the tracking edge points of the immediately preceding frame in the vehicle rectangular coordinate system includes: determining the current positions of the tracking edge points of the immediately preceding frame based on a speed and a yaw angle of a vehicle and a time difference between the immediately preceding frame and the current frame.

In some embodiments of this application, optionally, where an angle of orientation of a first point in the tracking edge points of the immediately preceding frame in relation to polar in the vehicle polar coordinate system is between angles of orientation of a second point and a third point of the observation edge points of the current frame in relation to polar in the vehicle polar coordinate system, linear interpolation is performed by using radial distances of the second point and the third point, to obtain an radial distance of a fourth point that is the same as the angle of orientation of the first point in relation to polar in the vehicle polar coordinate system; and an radial distance of the first point is corrected by means of filtering based on the radial distance of the first point and the radial distance of the fourth point.

In some embodiments of this application, optionally, the method includes: fitting the lane edge curve by means of a least square method based on the temporary tracking edge points; and determining that the fourth point is a part of the outliers if a distance between the fourth point in the temporary tracking edge points and the lane edge curve is greater than a preset value.

According to another aspect of this application, a lane edge extraction apparatus is provided, the apparatus including: an image obtaining apparatus configured to obtain an edge image sequence; a calculation apparatus configured to: receive tracking edge points, about lane edges, of an immediately preceding frame of the edge image sequence; determine observation edge points, about the lane edges, of a current frame of the edge image sequence; obtain temporary tracking edge points of the current frame by continuing the tracking edge points of the immediately preceding frame with the observation edge points of the current frame and correct the tracking edge points of the immediately preceding frame based on the observation edge points of the current frame; fit a lane edge curve based on the temporary tracking edge points; and exclude outliers from the temporary tracking edge points based on the lane edge curve, to form tracking edge points of the current frame; and an edge generation unit configured to output the lane edge curve, wherein it is determined that a point is a part of the outliers if a distance between the point in the temporary tracking edge points and the lane edge curve is greater than a preset value, wherein tracking edge points of a first frame of the edge image sequence are observation edge points of the first frame. The calculation apparatus is configured to: determine current positions of the tracking edge points of the immediately preceding frame and the observation edge points of the current frame in the vehicle rectangular coordinate system; stitch, in the vehicle rectangular coordinate system, a non-coincident part of the observation edge points of the current frame and the tracking edge points of the immediately preceding frame, to obtain a part of the temporary tracking edge points; map a coincident part of the observation edge points of the current frame and the tracking edge points of the immediately preceding frame into the vehicle polar coordinate system, and correct the tracking edge points of the immediately preceding frame by using the observation edge points of the current frame in the coincident part, to obtain a remaining part of the temporary tracking edge points; map the remaining part of the temporary tracking edge points into the vehicle rectangular coordinate system; and combine the part of the temporary tracking edge points and the remaining part of the temporary tracking edge points to form the temporary tracking edge points.

In some embodiments of this application, optionally, the determining current positions of the tracking edge points of the immediately preceding frame in the vehicle rectangular coordinate system includes: determining the current positions of the tracking edge points of the immediately preceding frame based on a speed and a yaw angle of a vehicle and a time difference between the immediately preceding frame and the current frame.

In some embodiments of this application, optionally, the calculation apparatus is configured to: where an angle of orientation of a first point in the tracking edge points of the immediately preceding frame in relation to polar in the vehicle polar coordinate system is between angles of orientation of a second point and a third point of the observation edge points of the current frame in relation to polar in the vehicle polar coordinate system, perform linear interpolation by using radial distances of the second point and the third point, to obtain an radial distance of a fourth point that is the same as the angle of orientation of the first point; and correct an radial distance of the first point by means of filtering based on the radial distance of the first point and the radial distance of the fourth point.

In some embodiments of this application, optionally, the calculation apparatus is configured to: fit the lane edge curve by means of a least square method based on the temporary tracking edge points; and determine that the fourth point is a part of the outliers if a distance between the fourth point in the temporary tracking edge points and the lane edge curve is greater than a preset value.

According to another aspect of this application, an autonomous driving system is provided, which includes any one of the lane edge extraction apparatuses as described above.

According to another aspect of this application, a vehicle is provided, which includes any one of the lane edge extraction apparatuses as described above or any one of the autonomous driving systems as described above.

According to another aspect of this application, there is provided a computer-readable storage medium storing instructions, where the instructions, when executed by a processor, cause the processor to perform any one of the methods as described above.

### Brief Description of the Drawings

The above and other objectives and advantages of this application will be more thorough and clearer from the following detailed description in conjunction with the drawings, where the same or similar elements are represented by the same reference numerals.
FIG. 1 shows a lane edge extraction method according to an embodiment of this application.
FIG. 2 shows a lane edge extraction apparatus according to an embodiment of this application.
FIG. 3 shows a principle of lane edge extraction according to an embodiment of this application.
FIG. 4 shows a principle of lane edge extraction according to an embodiment of this application.
FIG. 5 shows a principle of lane edge extraction according to an embodiment of this application.
FIG. 6 shows a scenario for lane edge extraction according to an embodiment of this application.

### Detailed Description of Embodiments

For the sake of brevity and illustrative purposes, the principles of this application are mainly described herein with reference to its exemplary embodiments. However, those skilled in the art would readily appreciate that the same principles can be equivalently applied to all types of lane edge extraction methods, lane edge extraction apparatuses, autonomous driving systems, vehicles, and computer-readable storage media, and the same or similar principles may be implemented therein. These variations do not depart from the scope of this application.

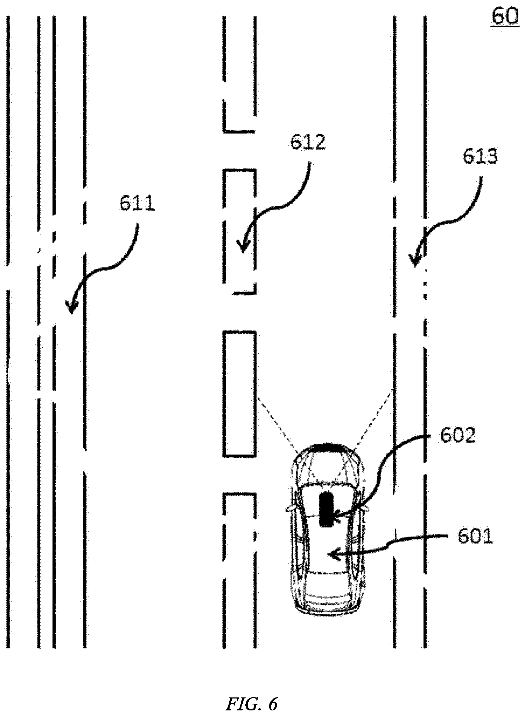

FIG. 6 shows a scenario 60 for lane edge extraction according to an embodiment of this application, in which a vehicle 601 is used for obtaining image information of lane edges by using an image obtaining apparatus 602 equipped for the vehicle itself. Only one image obtaining apparatus 602 is shown in the figure. However, the vehicle 601 may be provided with multiple image obtaining apparatuses as desired, which may also operate in different wavelength ranges.

As shown in FIG. 6, the lane edges may include a lane dividing line 612 (generally a white broken line) of lanes in a same direction, a road edge line 613 (generally a long solid white or yellow line), and a lane dividing line 611 (generally a long single or double solid yellow line) of lanes in different directions. Nevertheless, the above various traffic markings may be visually discontinuous due to aging, accumulated water and snow, etc., resulting in a failure to capture continuous markings by the image obtaining apparatus 602. In addition, the image obtaining apparatus 602 may also fail to capture the markings due to short-term blocking. However, computer vision-assisted/autonomous driving functions require accurate lane edge information. In view of this, high-quality lane edge information will be generated based on defective marking images obtained by the image obtaining apparatus 602 in the following examples of this application, for calling by a processing device such as an onboard computer.

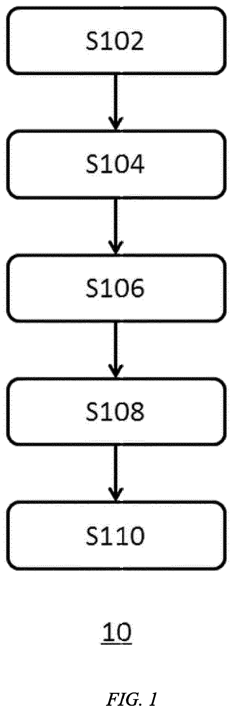

According to an aspect of this application, a lane edge extraction method is provided. As shown in FIG. 1, a lane edge extraction method 10 includes the steps as follows. The lane edge extraction method 10 involves receiving tracking edge points, about lane edges, of an immediately preceding frame of an edge image sequence in step S102. An image obtaining apparatus 602 such as in FIG. 6 can, when moving with a vehicle, capture a sequence of edge images at a fixed time interval. The sequence of edge images will be used to form observation edge points about lane edges, and tracking edge points can be further obtained by the following calculations. In some examples of this application, tracking edge points of each frame are generated by means of rolling, and tracking edge points of a current frame are generated in step S110 below. It should be noted that the tracking edge points of the immediately preceding frame may be generated in a previous computing cycle by using the same method as in steps S102 to S110.

In the context of the invention, the immediately preceding frame refers to a preceding frame that participates in the calculation and is used to determine the observation edge points and tracking edge points therein. In a typical example, the immediately preceding frame refers to an adjacent previous frame. In other examples, not every frame in the image sequence is used to determine observation edge points and tracking edge points therein, and the immediately preceding frame in this case may also be a non-adjacent previous frame.

The lane edge extraction method 10 involves determining observation edge points, about the lane edges, of a current frame of the edge image sequence in step S 104. The observation edge points are related to various lane edges shown in FIG. 6, and specifically, may be feature points extracted from various lane edges in the image sequence. A feature point extraction method may be implemented according to the existing technology or the technology to be developed, which is not limited in this application here. In addition, the tracking edge points in the context of this application are calculated based on the observation edge points, and therefore, the tracking edge points are indirectly calculated from the lane edges.

The lane edge extraction method 10 involves obtaining temporary tracking edge points of the current frame by continuing the tracking edge points of the immediately preceding frame with the observation edge points of the current frame and correcting the tracking edge points of the immediately preceding frame based on the observation edge points of the current frame in step S106. As the vehicle 601 in, for example, FIG. 6 travels, the image obtaining apparatus 602 will capture new image frames. When the vehicle 601 travels to a current position, the image obtaining apparatus 602 captures a current frame. In this case, observation edge points can be extracted from the current frame, and are used to be continued to the tracking edge points of the immediately preceding frame, to supplement information of the lane edges brought about by the vehicle 601 traveling to a new position. On the other hand, there may be differences in a coincident area between some observation edge points in the current frame and some tracking edge points in the immediately preceding frame, and in this case, these tracking edge points can be corrected by using the observation edge points, thereby eliminating accumulated errors. Edge points formed after continuing and correction will continue to be used in the following steps, and are thus called temporary tracking edge points.

Certainly, in a specific case, there may be no tracking edge points of the immediately preceding frame, and in this case, all observation edge points will serve as the temporary tracking edge points of the current frame. In other words, the above-mentioned continuing and correction operations may be omitted (or it is considered that a do-nothing operation is performed). This processing approach to unusual situations is used throughout this application.

The lane edge extraction method 10 involves fitting a lane edge curve based on the temporary tracking edge points in step S108. For example, the lane edge curve may be fitted by means of a least square method based on the temporary tracking edge points. Although some outliers will be removed from these temporary tracking edge points in step S110, since there are usually fewer outliers, the curve fitted in step S108 can well reflect features of the lane edges, without the need of removing the outliers and then fitting the curve again.

The lane edge extraction method 10 involves excluding outliers from the temporary tracking edge points based on the lane edge curve, to form tracking edge points of the current frame in step S110. For example, if a distance between a certain point in the temporary tracking edge points and the lane edge curve is greater than a preset value, it is determined that this point is a part of the outliers. After exclusion of the outliers, the remaining temporary tracking edge points are collected as "the tracking edge points of the current frame". The tracking edge points of the current frame will be input into the processing process of an immediately following frame, and the above process can be repeated. For the definition of the immediately following frame, reference may be made to the foregoing definition of the immediately preceding frame.

The general principle of processing for unusual situations has been described above. In some embodiments of this application, there is no tracking edge point input before a first frame of the edge image sequence, and therefore, observation edge points of the first frame can be used as tracking edge points of the first frame, and continue to be used for subsequent processing.

It can be seen from the above example that the tracking edge points are continuously updated iteratively during a calculation process. In each processing cycle, an observation edge point captured at a current moment is input, and the fitted lane edge curve is output. The iterative update of the tracking edge points can effectively eliminate the accumulated errors, and therefore, the lane edge curve generated by using the above example can well reflect the features of the lane edges, which provides a reliable data guarantee for functions such as autonomous driving.

In some embodiments, the determination of the observation edge points of the current frame is accomplished in a vehicle rectangular coordinate system. The vehicle rectangular coordinate system is a reference system with a certain point (for example, the image obtaining apparatus) of the vehicle itself as the origin. With the vehicle rectangular coordinate system, motion information of the vehicle can be directly used to deduce the update of a position of the measured point in the vehicle rectangular coordinate system. This configuration can significantly reduce the computational complexity.

In some embodiments, the correction of the tracking edge points of the immediately preceding frame is accomplished in a vehicle polar coordinate system. The image obtaining apparatus 602 such as in FIG. 6 captures images with its own position as a center of a circle (a center of sphere), and therefore, an imaging error is also related to this imaging principle. The determination of the observation edge points in the vehicle rectangular coordinate system has been described above, and the correction of the tracking edge points of the immediately preceding frame also in the vehicle rectangular coordinate system cannot well reflect the characteristics of the imaging error. However, performing error correction in the vehicle polar coordinate system can reflect the characteristics of circular (spherical) imaging, and will achieve a better correction effect than that in the vehicle rectangular coordinate system. Although it seems that computing overheads will increase due to a single coordinate transformation, the road edge curve can be efficiently fitted by fully utilizing different characteristics of the two coordinate systems, which cannot be implemented by means of a conventional single coordinate system.

In some embodiments of this application, the lane edge extraction method 10 further specifically includes the following process: determining current positions of the tracking edge points of the immediately preceding frame in the vehicle rectangular coordinate system; mapping the observation edge points of the current frame and the tracking edge points of the immediately preceding frame from the vehicle rectangular coordinate system to the vehicle polar coordinate system; continuing and correcting, in the vehicle polar coordinate system, the tracking edge points of the immediately preceding frame by using the observation edge points of the current frame, to obtain the temporary tracking edge points; and mapping the temporary tracking edge points into the vehicle rectangular coordinate system. In this example, the continuing and correction are both performed in the polar coordinate system. In this way, the continuing and correction can be completed in one coordinate system, which can simplify the processing process.

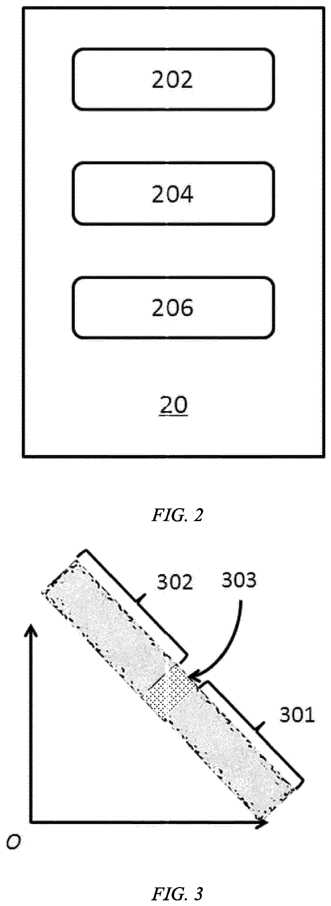

Referring to FIG. 3, a tracking edge point 301 of an immediately preceding frame and an observation edge point 302 of a current frame are both shown in a vehicle rectangular coordinate system, and there is an overlapping part 303 between the two. The so-called overlapping part refers to a set of areas by which two sides extend to each other into the deepest. There may be a difference between coordinates of the tracking edge point and coordinates of the observation edge point in the overlapping part 303, and the existence of two coordinate records for a same feature point indicates that there is an error in terms of coordinate values. Therefore, the overlapping part 303 includes accumulated errors recorded in the tracking edge point 301 of the immediately preceding frame, and these accumulated errors can be corrected by using the observation edge point 302 of the current frame. In the previous example, the continuing and correction are both performed in polar coordinates, and therefore, no continuing or correction is performed in the rectangular coordinate system shown in FIG. 3.

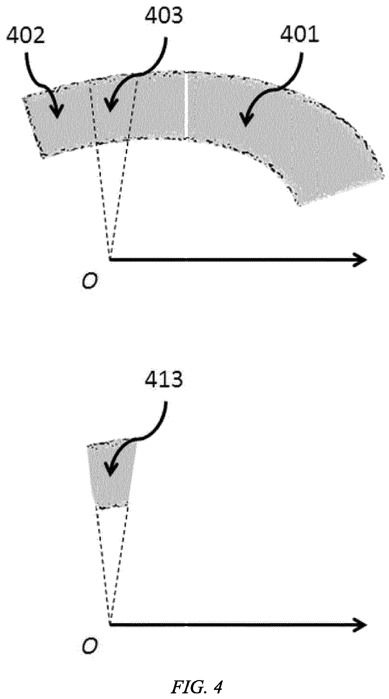

FIG. 4 shows an example of mapping a point in a rectangular coordinate system into a polar coordinate system. In an upper part of FIG. 4, a point set 401 corresponds to the tracking edge point 301 of the immediately preceding frame, a point set 402 corresponds to the observation edge point 302 of the current frame, and a point set 403 corresponds to the overlapping part 303 between the tracking edge point and the observation edge point. In the previous example, the continuing and correction are both performed in the coordinates. Specifically, the overlapping part can be first corrected to obtain a correction point set corresponding to the point set 403, and the correction point set can then be continued with the point set 401 and the point set 402. These point sets continued together are referred to as temporary tracking edge points, which will also be mapped back into the vehicle rectangular coordinate system.

In some other embodiments of this application, the lane edge extraction method 10 further specifically includes the following process: determining current positions of the tracking edge points of the immediately preceding frame in the vehicle rectangular coordinate system; continuing, in the vehicle rectangular coordinate system, a non-coincident part of the observation edge points of the current frame and the tracking edge points of the immediately preceding frame, to obtain a part of the temporary tracking edge points; mapping a coincident part of the observation edge points of the current frame and the tracking edge points of the immediately preceding frame into the vehicle polar coordinate system, and correcting the tracking edge points of the immediately preceding frame by using the observation edge points of the current frame in the coincident part, to obtain a remaining part of the temporary tracking edge points; and mapping the remaining part of the temporary tracking edge points into the vehicle rectangular coordinate system. In this example, the continuing is carried out in rectangular coordinates, while the correction is carried out in polar coordinates. In this way, issues suitable for processing in the coordinate system can be handled by using the characteristics of different coordinates, such that the processing efficiency can be improved.

Still referring to FIG. 3, the tracking edge point 301 of the immediately preceding frame can be first continued to the observation edge point 302 of the current frame in the rectangular coordinate system, that is to say, coincident parts of the tracking edge point of the immediately preceding frame and the observation edge point of the current frame (i.e., 301 and 302 in FIG. 3) are first continued in the rectangular coordinate system. In this case, a part of the temporary tracking edge points can be generated (and the remaining part thereof will be generated in the polar coordinates).

In addition, FIG. 4 shows an example of mapping a point in a rectangular coordinate system into a polar coordinate system. In a lower part of FIG. 4, the point set 413 corresponds to the overlapping part 303 in FIG. 3. It can be seen that compared with the upper part of the figure, in the lower part, only the overlapping part is mapped. In this case, the tracking edge points of the immediately preceding frame can be corrected by using the observation edge points of the current frame in the overlapping part, to obtain a correction result, that is, the remaining part of the temporary tracking edge points, and the remaining part is also mapped back into the vehicle rectangular coordinate system. The part of the temporary tracking edge points and the remaining part of the temporary tracking edge points may then be combined to form the temporary tracking edge points.

Due to a dynamic change in vehicle positions, current positions of the tracking edge points of the immediately preceding frame in the vehicle rectangular coordinate system need to be first determined in the above two examples. For example, the current positions of the tracking edge points of the immediately preceding frame may be determined based on a speed and a yaw angle of a vehicle and a time difference between the immediately preceding frame and the current frame. In this way, the positions of the tracking edge points can be updated directly based on the vehicle motion and the time difference.

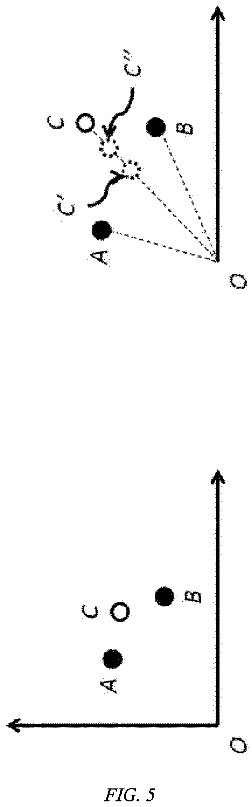

In the above two examples, the correction operation is implemented in polar coordinates. In some embodiments of this application, where an angle of orientation of a first point in the tracking edge points of the immediately preceding frame is between a second point and a third point of the observation edge points of the current frame, linear interpolation is performed by using radial distances of the second point and the third point, to obtain an radial distance of a fourth point that is the same as the angle of orientation of the first point; and an radial distance of the first point is corrected by means of filtering based on the radial distance of the first point and the radial distance of the fourth point. Specifically, as shown in FIG. 5, points A and B in the vehicle rectangular coordinate system are the observation edge points of the current frame, and a point C is the tracking edge point of the immediately preceding frame. In other words, an area formed by the points A, B, and C is the coincident(overlapping) part described in the context of this application. In this case, the points A, B, and C are mapped into the vehicle polar coordinate system. A right part of FIG. 5 shows relative positional relationships of the points A, B, and C in the polar coordinate system, where an angle of orientation of the point C is between points A and B. In some examples of this application, coordinates of the point C may be corrected by using coordinates of points A and B. First, linear interpolation can be performed by using the points A and B, to obtain a point C' that is the same as the angle of orientation of the point C. Then, filtering (e.g., Kalman filtering) processing can be performed on the points C and C', to obtain a corrected position point C", which is used as new coordinates of the point C.

According to another aspect of this application, a lane edge extraction apparatus is provided. As shown in FIG. 2, a lane edge extraction apparatus 20 includes an image obtaining apparatus 202, a calculation apparatus 204, and an edge generation unit 206. The image obtaining apparatus 202 of the lane edge extraction apparatus 20 is configured to obtain an edge image sequence.

The calculation apparatus 204 of the lane edge extraction apparatus 20 is configured to receive tracking edge points, about lane edges, of an immediately preceding frame of an edge image sequence. The image obtaining apparatus 202 can, when moving with a vehicle, capture a sequence of edge images at a fixed time interval. The sequence of edge images will be used by the calculation apparatus 204 to form observation edge points about lane edges, and tracking edge points can be further obtained by the following calculations. In some examples of this application, tracking edge points of each frame are generated by means of rolling, and the calculation apparatus 204 may also generate tracking edge points of a current frame below. It should be noted that the tracking edge points of the immediately preceding frame may be generated in a previous computing cycle by using the same method as that for calculating the tracking edge points of the current frame by the calculation apparatus 204.

In the context of the invention, the immediately preceding frame refers to a preceding frame that participates in the calculation and is used to determine the observation edge points and tracking edge points therein. In a typical example, the immediately preceding frame refers to an adjacent previous frame. In other examples, not every frame in the image sequence is used to determine observation edge points and tracking edge points therein, and the immediately preceding frame in this case may also be a non-adjacent previous frame.

The calculation apparatus 204 is further configured to determine observation edge points, about the lane edges, of a current frame of the edge image sequence. The observation edge points are related to various lane edges shown in FIG. 6, and specifically, may be feature points extracted from various lane edges in the image sequence. A method for extracting feature points by the calculation apparatus 204 may be implemented according to the existing technology or the technology to be developed, which is not limited in this application here. In addition, the tracking edge points in the context of this application are calculated based on the observation edge points, and therefore, the tracking edge points are indirectly calculated from the lane edges.

The calculation apparatus 204 is further configured to continue and correct the tracking edge points of the immediately preceding frame based on the observation edge points of the current frame, to obtain temporary tracking edge points of the current frame. As the vehicle travels, the image obtaining apparatus 202 will capture new image frames. When the vehicle travels to a current position, the image obtaining apparatus 202 captures a current frame. In this case, observation edge points can be extracted from the current frame, and are used to be continued with the tracking edge points of the immediately preceding frame, to supplement information of the lane edges brought about by the vehicle traveling to a new position. On the other hand, there may be differences in a coincident area between some observation edge points in the current frame and some tracking edge points in the immediately preceding frame, and in this case, these tracking edge points can be corrected by using the observation edge points, thereby eliminating accumulated errors. Edge points formed after continuing and correction will continue to be used in the following steps, and are thus called temporary tracking edge points.

Certainly, in a specific case, there may be no tracking edge points of the immediately preceding frame, and in this case, all observation edge points will serve as the temporary tracking edge points of the current frame. In other words, the above-mentioned continuing and correction operations may be omitted (or it is considered that a do-nothing operation is performed). This processing approach to unusual situations is used throughout this application.

The calculation apparatus 204 is further configured to fit a lane edge curve based on the temporary tracking edge points. For example, the calculation apparatus 204 may fit the lane edge curve by means of a least square method based on the temporary tracking edge points. Although some outliers will be removed from these temporary tracking edge points, since there are usually fewer outliers, the curve fitted by the calculation apparatus 204 can well reflect features of the lane edges, without the need of removing the outliers and then fitting the curve again.

The calculation apparatus 204 is further configured to exclude outliers from the temporary tracking edge points based on the lane edge curve, to form tracking edge points of the current frame. For example, if a distance between a certain point in the temporary tracking edge points and the lane edge curve is greater than a preset value, it is determined that this point is a part of the outliers. After exclusion of the outliers, the remaining temporary tracking edge points are collected as "the tracking edge points of the current frame". The tracking edge points of the current frame will be input into the processing process of an immediately following frame, and the above process can be repeated. For the definition of the immediately following frame, reference may be made to the foregoing definition of the immediately preceding frame.

The general principle of processing for unusual situations has been described above. In some embodiments of this application, there is no tracking edge point input before a first frame of the edge image sequence, and therefore, observation edge points of the first frame can be used as tracking edge points of the first frame, and continue to be used for subsequent processing.

The edge generation unit 206 of the lane edge extraction apparatus 20 is configured to output the lane edge curve. It can be seen from the above example that the tracking edge points are continuously updated iteratively during a calculation process. In each processing cycle, a parameter of an observation edge point captured at a current moment is input, and the fitted lane edge curve is output by the edge generation unit 206. The iterative update of the tracking edge points can effectively eliminate the accumulated errors, and therefore, the lane edge curve generated by using the above example can well reflect the features of the lane edges, which provides a reliable data guarantee for functions such as autonomous driving.

In some embodiments of this application, the calculation apparatus 204 is configured to determine observation edge points of the current frame in a vehicle rectangular coordinate system, and the calculation apparatus 204 is configured to correct the tracking edge points of the immediately preceding frame in a vehicle polar coordinate system. The vehicle rectangular coordinate system is a reference system with a certain point (for example, the image obtaining apparatus) of the vehicle itself as the origin. With the vehicle rectangular coordinate system, motion information of the vehicle can be directly used to deduce the update of a position of the measured point in the vehicle rectangular coordinate system. This configuration can significantly reduce the computational complexity.

However, in general, the image obtaining apparatus 202 captures images with its own position as a center of a circle (a center of sphere), and therefore, an imaging error is also related to this imaging principle. The determination of the observation edge points in the vehicle rectangular coordinate system has been described above, and the correction of the tracking edge points of the immediately preceding frame also in the vehicle rectangular coordinate system cannot well reflect the characteristics of the imaging error. However, performing error correction in the vehicle polar coordinate system can reflect the characteristics of circular (spherical) imaging, and will achieve a better correction effect than that in the vehicle rectangular coordinate system. Although it seems that computing overheads will increase due to a single coordinate transformation, the road edge curve can be efficiently fitted by fully utilizing different characteristics of the two coordinate systems, which cannot be implemented by means of a conventional single coordinate system.

In some embodiments of this application, the calculation apparatus 204 is specifically configured to perform the following operations: determining current positions of the tracking edge points of the immediately preceding frame in the vehicle rectangular coordinate system; mapping the observation edge points of the current frame and the tracking edge points of the immediately preceding frame from the vehicle rectangular coordinate system to the vehicle polar coordinate system; continuing and correcting, in the vehicle polar coordinate system, the tracking edge points of the immediately preceding frame by using the observation edge points of the current frame, to obtain the temporary tracking edge points; and mapping the temporary tracking edge points into the vehicle rectangular coordinate system. In this example, the continuing and correction are both performed in the polar coordinate system. In this way, the continuing and correction can be completed in one coordinate system, which can simplify the processing process.

Referring to FIG. 3, a tracking edge point 301 of an immediately preceding frame and an observation edge point 302 of a current frame are both shown in a vehicle rectangular coordinate system, and there is an overlapping part 303 between the two. The so-called overlapping part refers to a set of areas by which two sides extend to each other into the deepest. There may be a difference between coordinates of the tracking edge point and coordinates of the observation edge point in the overlapping part 303, and the existence of two coordinate records for a same feature point indicates that there is an error in terms of coordinate values. Therefore, the overlapping part 303 includes accumulated errors recorded in the tracking edge point 301 of the immediately preceding frame, and these accumulated errors can be corrected by using the observation edge point 302 of the current frame. In the previous example, the continuing and correction are both performed in polar coordinates, and therefore, no continuing or correction is performed in the rectangular coordinate system shown in FIG. 3.

FIG. 4 shows an example of mapping a point in a rectangular coordinate system into a polar coordinate system. In an upper part of FIG. 4, a point set 401 corresponds to the tracking edge point 301 of the immediately preceding frame, a point set 402 corresponds to the observation edge point 302 of the current frame, and a point set 403 corresponds to the overlapping part 303 between the tracking edge point and the observation edge point. In the previous example, the continuing and correction are both performed in the coordinates. Specifically, a correction point set corresponding to the point set 403 can be obtained by correcting the overlapping part, and the correction point set can then be continued with the point set 401 and the point set 402. These point sets continued together are referred to as temporary tracking edge points, which will also be mapped back into the vehicle rectangular coordinate system.

In some embodiments of this application, the calculation apparatus 204 is specifically configured to perform the following operations: determining current positions of the tracking edge points of the immediately preceding frame in the vehicle rectangular coordinate system; continuing, in the vehicle rectangular coordinate system, a non-coincident part of the observation edge points of the current frame and the tracking edge points of the immediately preceding frame, to obtain a part of the temporary tracking edge points; mapping a coincident part of the observation edge points of the current frame and the tracking edge points of the immediately preceding frame into the vehicle polar coordinate system, and correcting the tracking edge points of the immediately preceding frame by using the observation edge points of the current frame in the coincident part, to obtain a remaining part of the temporary tracking edge points; and mapping the remaining part of the temporary tracking edge points into the vehicle rectangular coordinate system. In this example, the continuing is carried out in rectangular coordinates, while the correction is carried out in polar coordinates. In this way, issues suitable for processing in the coordinate system can be handled by using the characteristics of different coordinates, such that the processing efficiency can be improved.

Still referring to FIG. 3, the tracking edge point 301 of the immediately preceding frame can be first continued to the observation edge point 302 of the current frame in the rectangular coordinate system, that is to say, non-coincident parts of the tracking edge point of the immediately preceding frame and the observation edge point of the current frame (i.e. 301 and 302 in FIG. 3) are first continued in the rectangular coordinate system. In this case, a part of the temporary tracking edge points can be generated (and the remaining part thereof will be generated in the polar coordinates).

In addition, FIG. 4 shows an example of mapping a point in a rectangular coordinate system into a polar coordinate system. In a lower part of FIG. 4, the point set 413 corresponds to the overlapping part 303 in FIG. 3. It can be seen that compared with the upper part of the figure, in the lower part, only the overlapping part is mapped. In this case, the tracking edge points of the immediately preceding frame can be corrected by using the observation edge points of the current frame in the overlapping part, to obtain a correction result, that is, the remaining part of the temporary tracking edge points, and the remaining part is also mapped back into the vehicle rectangular coordinate system. The part of the temporary tracking edge points and the remaining part of the temporary tracking edge points may then be combined to form the temporary tracking edge points.

Due to a dynamic change in vehicle positions, current positions of the tracking edge points of the immediately preceding frame in the vehicle rectangular coordinate system need to be first determined in the above two examples. For example, the current positions of the tracking edge points of the immediately preceding frame may be determined based on a speed and a yaw angle of a vehicle and a time difference between the immediately preceding frame and the current frame. In this way, the positions of the tracking edge points can be updated directly based on the vehicle motion and the time difference.

In the above two examples, the correction operation is implemented in polar coordinates. In some embodiments of this application, the calculation apparatus 204 is specifically configured to perform the following process to implement the correction: where an angle of orientation of a first point in the tracking edge points of the immediately preceding frame is between a second point and a third point of the observation edge points of the current frame, performing linear interpolation by using radial distances of the second point and the third point, to obtain an radial distance of a fourth point that is the same as the angle of orientation of the first point; and correcting an radial distance of the first point by means of filtering based on the radial distance of the first point and the radial distance of the fourth point. Specifically, as shown in FIG. 5, points A and B in the vehicle rectangular coordinate system are the observation edge points of the current frame, and a point C is the tracking edge point of the immediately preceding frame. In other words, an area formed by the points A, B, and C is the coincident (overlapping) part described in the context of this application. In this case, the points A, B, and C are mapped into the vehicle polar coordinate system. A right part of FIG. 5 shows relative positional relationships of the points A, B, and C in the polar coordinate system, where an angle of orientation of the point C is between points A and B. In some examples of this application, coordinates of the point C may be corrected by using coordinates of points A and B. First, linear interpolation can be performed by using the points A and B, to obtain a point C' that is the same as the angle of orientation of the point C. Then, filtering (e.g., Kalman filtering) processing can be performed on the points C and C', to obtain a corrected position point C", which is used as new coordinates of the point C.

According to another aspect of this application, an autonomous driving system is provided, which includes any one of the lane edge extraction apparatuses as described above.

According to another aspect of this application, a vehicle is provided, which includes any one of the lane edge extraction apparatuses as described above or any one of the autonomous driving systems as described above.

According to another aspect of this application, there is provided a computer-readable storage medium storing instructions, where the instructions, when executed by a processor, cause the processor to perform any one of the lane edge extraction methods as described above. The computer-readable medium in this application includes various types of computer storage media, and may be any usable medium accessible to a general-purpose or special-purpose computer. For example, the computer-readable medium may include a RAM, a ROM, an EPROM, an E²PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. For example, the storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

The invention is not limited to the disclosed exemplary embodiments, but by the scope of the following claims.

## Claims

1. A computer-implemented lane edge extraction method (10), comprising:
receiving tracking edge points, about lane edges, of an immediately preceding frame of an edge image sequence (S102);
determining observation edge points, about the lane edges, of a current frame of the edge image sequence (S104);
obtaining temporary tracking edge points of the current frame by continuing the tracking edge points of the immediately preceding frame with the observation edge points of the current frame and correcting the tracking edge points of the immediately preceding frame based on the observation edge points of the current frame (S106);
fitting a lane edge curve based on the temporary tracking edge points (S108); and
excluding outliers from the temporary tracking edge points based on the lane edge curve, to form tracking edge points of the current frame, wherein it is determined that a point is a part of the outliers if a distance between the point in the temporary tracking edge points and the lane edge curve is greater than a preset value (S110),
wherein tracking edge points of a first frame of the edge image sequence are observation edge points of the first frame,
wherein the obtaining temporary tracking edge points of the current frame by continuing the tracking edge points of the immediately preceding frame with the observation edge points of the current frame and correcting the tracking edge points of the immediately preceding frame based on the observation edge points of the current frame (S106) comprise:
determining current positions of the tracking edge points of the immediately preceding frame and the observation edge points of the current frame in the vehicle rectangular coordinate system;
continuing, in the vehicle rectangular coordinate system, a non-coincident part of the observation edge points of the current frame and the tracking edge points of the immediately preceding frame, to obtain a part of the temporary tracking edge points;
mapping a coincident part of the observation edge points of the current frame and the tracking edge points of the immediately preceding frame into the vehicle polar coordinate system, and correcting the tracking edge points of the immediately preceding frame by using the observation edge points of the current frame in the coincident part, to obtain a remaining part of the temporary tracking edge points;
mapping the remaining part of the temporary tracking edge points into the vehicle rectangular coordinate system; and
combining the part of the temporary tracking edge points and the remaining part of the temporary tracking edge points to form the temporary tracking edge points.

2. The method (10) according to claim 1, wherein the determining current positions of the tracking edge points of the immediately preceding frame in the vehicle rectangular coordinate system comprises: determining the current positions of the tracking edge points of the immediately preceding frame based on a speed and a yaw angle of a vehicle and a time difference between the immediately preceding frame and the current frame.

3. The method (10) according to claim 1 or 2, wherein where an angle of orientation of a first point in the tracking edge points of the immediately preceding frame in relation to polar in the vehicle polar coordinate system is between angles of orientation of a second point and a third point of the observation edge points of the current frame in relation to polar in the vehicle polar coordinate system,
linear interpolation is performed by using radial distances of the second point and the third point, to obtain an radial distance of a fourth point that is the same as the angle of orientation of the first point in relation to polar in the vehicle polar coordinate system; and
an radial distance of the first point is corrected by means of filtering based on the radial distance of the first point and the radial distance of the fourth point.

4. The method (10) according to claim 3, wherein
the lane edge curve is fitted by means of a least square method based on the temporary tracking edge points; and
it is determined that the fourth point is a part of the outliers if a distance between the fourth point in the temporary tracking edge points and the lane edge curve is greater than a preset value.

5. A computer-readable storage medium storing instructions, wherein the instructions, when executed by a processor, cause the processor to perform a lane edge extraction method, **characterized in that**, preferably the method (10) of any one of claims 1 to 4, the method comprising:
receiving tracking edge points, about lane edges, of an immediately preceding frame of an edge image sequence (S102);
determining observation edge points, about the lane edges, of a current frame of the edge image sequence (S104);
obtaining temporary tracking edge points of the current frame by continuing the tracking edge points of the immediately preceding frame with the observation edge points of the current frame and correcting the tracking edge points of the immediately preceding frame based on the observation edge points of the current frame (S106);
fitting a lane edge curve based on the temporary tracking edge points (S108); and
excluding outliers from the temporary tracking edge points based on the lane edge curve, to form tracking edge points of the current frame, wherein it is determined that a point is a part of the outliers if a distance between the point in the temporary tracking edge points and the lane edge curve is greater than a preset value (S110),
wherein tracking edge points of a first frame of the edge image sequence are observation edge points of the first frame.

6. A lane edge extraction apparatus (20), **characterized in that**, comprising:
an image obtaining apparatus (202) configured to obtain an edge image sequence;
a calculation apparatus (204) configured to:
receive tracking edge points, about lane edges, of an immediately preceding frame of the edge image sequence;
determine observation edge points, about the lane edges, of a current frame of the edge image sequence;
obtain temporary tracking edge points of the current frame by continuing the tracking edge points of the immediately preceding frame with the observation edge points of the current frame and correct the tracking edge points of the immediately preceding frame based on the observation edge points of the current frame;
fit a lane edge curve based on the temporary tracking edge points; and
exclude outliers from the temporary tracking edge points based on the lane edge curve, to form tracking edge points of the current frame, wherein it is determined that a point is a part of the outliers if a distance between the point in the temporary tracking edge points and the lane edge curve is greater than a preset value,
wherein tracking edge points of a first frame of the edge image sequence are observation edge points of the first frame; and
an edge generation unit (206) configured to output the lane edge curve, wherein the calculation apparatus (204) is configured to:
determine current positions of the tracking edge points of the immediately preceding frame and the observation edge points of the current frame in the vehicle rectangular coordinate system;
continue, in the vehicle rectangular coordinate system, a non-coincident part of the observation edge points of the current frame and the tracking edge points of the immediately preceding frame, to obtain a part of the temporary tracking edge points;
map a coincident part of the observation edge points of the current frame and the tracking edge points of the immediately preceding frame into the vehicle polar coordinate system, and correcting the tracking edge points of the immediately preceding frame by using the observation edge points of the current frame in the coincident part, to obtain a remaining part of the temporary tracking edge points;
map the remaining part of the temporary tracking edge points into the vehicle rectangular coordinate system; and
combine the part of the temporary tracking edge points and the remaining part of the temporary tracking edge points to form the temporary tracking edge points.

7. An autonomous driving system, **characterized in that**, the autonomous driving system comprises the lane edge extraction apparatus (20) of claim 6.

8. A vehicle, **characterized in that**, the vehicle comprises the lane edge extraction apparatus (20) of claim 6 or the autonomous driving system of claim 7.

## Patentansprüche

1. Computer-implementiertes Verfahren zur Fahrbahnrandextraktion (10), das Folgendes umfasst:
Empfangen von Verfolgungsrandpunkten, um Fahrbahnränder herum, eines unmittelbar vorhergehenden Rahmens einer Randbildsequenz (S102);
Bestimmen von Beobachtungsrandpunkten, um die Fahrbahnränder herum, eines aktuellen Rahmens der Randbildsequenz (S104);
Erhalten von temporären Verfolgungsrandpunkten des aktuellen Rahmens durch Fortführen der Verfolgungsrandpunkte des unmittelbar vorhergehenden Rahmens mit den Beobachtungsrandpunkten des aktuellen Rahmens und Korrigieren der Verfolgungsrandpunkte des unmittelbar vorhergehenden Rahmens basierend auf den Beobachtungsrandpunkten des aktuellen Rahmens (S106); Einpassen einer Fahrbahnrandkurve basierend auf den temporären Verfolgungsrandpunkten (S108); und
Ausschließen von Ausreißern aus den temporären Verfolgungsrandpunkten basierend auf der Fahrbahnrandkurve zum Bilden von Verfolgungsrandpunkten des aktuellen Rahmens, wobei bestimmt wird, dass ein Punkt ein Teil der Ausreißer ist, wenn ein Abstand zwischen dem Punkt in den temporären Verfolgungsrandpunkten und der Fahrbahnrandkurve größer als ein voreingestellter Wert ist (S110),
wobei Verfolgungsrandpunkte eines ersten Rahmens der Randbildsequenz Beobachtungsrandpunkte des ersten Rahmens sind,
wobei das Erhalten von temporären Verfolgungsrandpunkten des aktuellen Rahmens durch Fortführen der Verfolgungsrandpunkte des unmittelbar vorhergehenden Rahmens mit den Beobachtungsrandpunkten des aktuellen Rahmens und Korrigieren der Verfolgungsrandpunkte des unmittelbar vorhergehenden Rahmens basierend auf den Beobachtungsrandpunkten (S106) Folgendes umfasst:
Bestimmen von aktuellen Positionen der Verfolgungsrandpunkte des unmittelbar vorhergehenden Rahmens und der Beobachtungsrandpunkte des aktuellen Rahmens im rechtwinkligen Fahrzeugkoordinatensystem; Fortführen, im rechtwinkligen Fahrzeugkoordinatensystem, eines nicht-übereinstimmenden Teils der Beobachtungsrandpunkte des aktuellen Rahmens und der Verfolgungsrandpunkte des unmittelbar vorhergehenden Rahmens zum Erhalten eines Teils der temporären Verfolgungsrandpunkte;
Abbilden eines übereinstimmenden Teils der Beobachtungsrandpunkte des aktuellen Rahmens und der Verfolgungsrandpunkte des unmittelbar vorhergehenden Rahmens in das Fahrzeug-Polarkoordinatensystem und Korrigieren der Verfolgungsrandpunkte des unmittelbar vorhergehenden Rahmens unter Verwendung der Beobachtungsrandpunkte des aktuellen Rahmens im übereinstimmenden Teil zum Erhalten des verbleibenden Teils der temporären Verfolgungsrandpunkte;
Abbilden des verbleibenden Teils der temporären Verfolgungsrandpunkte in das rechtwinklige Fahrzeugkoordinatensystem; und
Kombinieren des Teils der temporären Verfolgungsrandpunkte und des verbleibenden Teils der temporären Verfolgungsrandpunkte zum Bilden der temporären Verfolgungsrandpunkte.

2. Verfahren (10) nach Anspruch 1, wobei das Bestimmen aktueller Positionen der Verfolgungsrandpunkte des unmittelbar vorhergehenden Rahmens im rechtwinkligen Fahrzeugkoordinatensystem Folgendes umfasst: Bestimmen der aktuellen Positionen der Verfolgungsrandpunkte des unmittelbar vorhergehenden Rahmens basierend auf einer Geschwindigkeit und einem Gierwinkel eines Fahrzeugs und einer Zeitdifferenz zwischen dem unmittelbar vorhergehenden Rahmen und dem aktuellen Rahmen.

3. Verfahren (10) nach Anspruch 1 oder 2, wobei ein Ausrichtungswinkel eines ersten Punktes in den Verfolgungsrandpunkten des unmittelbar vorhergehenden Rahmens in Bezug auf polar im Fahrzeug-Polarkoordinatensystem zwischen Ausrichtungswinkeln eines zweiten Punktes und eines dritten Punktes der Beobachtungsrandpunkte des aktuellen Rahmens im Fahrzeug-Polarkoordinatensystem ist,
wobei lineare Interpolation durchgeführt wird unter Verwendung von radialen Abständen des zweiten Punktes und des dritten Punktes zum Erhalten eines radialen Abstands eines vierten Punktes, der der gleiche wie der Ausrichtungswinkel des ersten Punktes in Bezug auf polar im polaren Fahrzeugkoordinatensystems ist; und
wobei ein radialer Abstand des ersten Punktes mittels Filterung basierend auf dem radialen Abstand des ersten Punktes und dem radialen Abstand des vierten Punktes korrigiert wird.

4. Verfahren (10) nach Anspruch 3, wobei die Fahrbahnrandkurve mittels eines Verfahrens der kleinsten Quadrate basierend auf den temporären Verfolgungsrandpunkten eingepasst wird; und
bestimmt wird, dass der vierte Punkt ein Teil der Ausreißer ist, wenn ein Abstand zwischen dem vierten Punkt in den temporären Verfolgungsrandpunkten und der Fahrbahnrandkurve größer als ein voreingestellter Wert ist.

5. Computerlesbares Speichermedium, das Anweisungen speichert, wobei die Anweisungen, wenn sie durch einen Prozessor ausgeführt werden, den Prozessor veranlassen, ein Verfahren zur Fahrbahnrandextraktion durchzuführen, vorzugsweise das Verfahren (10) nach einem der Ansprüche 1 bis 4, **dadurch gekennzeichnet, dass** das Verfahren Folgendes umfasst:
Empfangen von Verfolgungsrandpunkten, um Fahrbahnränder herum, eines unmittelbar vorhergehenden Rahmens einer Randbildsequenz (S102);
Bestimmen von Beobachtungsrandpunkten, um die Fahrbahnränder herum, eines aktuellen Rahmens der Randbildsequenz (S104);
Erhalten von temporären Verfolgungsrandpunkten des aktuellen Rahmens durch Fortführen der Verfolgungsrandpunkte des unmittelbar vorhergehenden Rahmens mit den Beobachtungsrandpunkten des aktuellen Rahmens und Korrigieren der Verfolgungsrandpunkte des unmittelbar vorhergehenden Rahmens basierend auf den Beobachtungsrandpunkten des aktuellen Rahmens (S106); Einpassen einer Fahrbahnrandkurve basierend auf den temporären Verfolgungsrandpunkten (S108); und
Ausschließen von Ausreißern aus den temporären Verfolgungsrandpunkten basierend auf der Fahrbahnrandkurve zum Bilden von Verfolgungsrandpunkten des aktuellen Rahmens, wobei bestimmt wird, dass ein Punkt ein Teil der Ausreißer ist, wenn ein Abstand zwischen dem Punkt in den temporären Verfolgungsrandpunkten und der Fahrbahnrandkurve größer als ein voreingestellter Wert ist (S110),
wobei Verfolgungsrandpunkte eines ersten Rahmens der Randbildsequenz Beobachtungsrandpunkte des ersten Rahmens sind.

6. Einrichtung zur Fahrbahnrandextraktion (20), **dadurch gekennzeichnet, dass** sie Folgendes umfasst:
eine Bilderhalteeinrichtung (202), ausgelegt zum Erhalten einer Randbildsequenz;
eine Berechnungseinrichtung (204), ausgelegt zum:
Empfangen von Verfolgungsrandpunkten, um Fahrbahnränder herum, eines unmittelbar vorhergehenden Rahmens der Randbildsequenz;
Bestimmen von Beobachtungsrandpunkten, um die Fahrbahnränder herum, eines aktuellen Rahmens der Randbildsequenz;
Erhalten von temporären Verfolgungsrandpunkten des aktuellen Rahmens durch Fortführen der Verfolgungsrandpunkte des unmittelbar vorhergehenden Rahmens mit den Beobachtungsrandpunkten des aktuellen Rahmens und Korrigieren der Verfolgungsrandpunkte des unmittelbar vorhergehenden Rahmens basierend auf den Beobachtungsrandpunkten des aktuellen Rahmens;
Einpassen einer Fahrbahnrandkurve basierend auf den temporären Verfolgungsrandpunkten; und
Ausschließen von Ausreißern aus den temporären Verfolgungsrandpunkten basierend auf der Fahrbahnrandkurve zum Bilden von Verfolgungsrandpunkten des aktuellen Rahmens, wobei bestimmt wird, dass ein Punkt ein Teil der Ausreißer ist, wenn ein Abstand zwischen dem Punkt in den temporären Verfolgungsrandpunkten und der Fahrbahnrandkurve größer als ein voreingestellter Wert ist,
wobei Verfolgungsrandpunkte eines ersten Rahmens der Randbildsequenz Beobachtungsrandpunkte des ersten Rahmens sind; und
eine Randerzeugungseinheit (206), ausgelegt zum Ausgeben der Fahrbahnrandkurve, wobei die Berechnungseinrichtung (204) ausgelegt ist zum:
Bestimmen von aktuellen Positionen der Verfolgungsrandpunkte des unmittelbar vorhergehenden Rahmens und der Beobachtungsrandpunkte des aktuellen Rahmens in dem rechtwinkligen Fahrzeugkoordinatensystem; Fortführen, im rechtwinkligen Fahrzeugkoordinatensystem, eines nicht-übereinstimmenden Teils der Beobachtungsrandpunkte des aktuellen Rahmens und der Verfolgungsrandpunkte des unmittelbar vorhergehenden Rahmens zum Erhalten eines Teils der temporären Verfolgungsrandpunkte;
Abbilden eines übereinstimmenden Teils der Beobachtungsrandpunkte des aktuellen Rahmens und der Verfolgungsrandpunkte des unmittelbar vorhergehenden Rahmens in das Fahrzeug-Polarkoordinatensystem und Korrigieren der Verfolgungsrandpunkte des unmittelbar vorhergehenden Rahmens unter Verwendung der Beobachtungsrandpunkte des aktuellen Rahmens im übereinstimmenden Teil zum Erhalten des verbleibenden Teils der temporären Verfolgungsrandpunkte;
Abbilden des verbleibenden Teils der temporären Verfolgungsrandpunkte in das rechtwinklige Fahrzeugkoordinatensystem; und
Kombinieren des Teils der temporären Verfolgungsrandpunkte und des verbleibenden Teils der temporären Verfolgungsrandpunkte zum Bilden der temporären Verfolgungsrandpunkte.

7. Autonomes Fahrsystem, **dadurch gekennzeichnet, dass** das autonome Fahrsystem die Einrichtung zur Fahrbahnrandextraktion (20) nach Anspruch 6 umfasst.

8. Fahrzeug, **dadurch gekennzeichnet, dass** das Fahrzeug die Einrichtung zur Fahrbahnrandextraktion (20) nach Anspruch 6 oder das autonome Fahrsystem nach Anspruch 7 umfasst.

## Revendications

1. Procédé (10) d'extraction de bords de voie mis en œuvre par ordinateur, comprenant :
la réception de points de bord suivis, relatifs à des bords de voie, d'une image élémentaire immédiatement précédente d'une séquence d'images de bord (S102) ;
la détermination de points de bord observés, relatifs aux bords de voie, d'une image élémentaire courante de la séquence d'images de bord (S104) ;
l'obtention de points de bord suivis temporaires de l'image élémentaire courante par prolongement des points de bord suivis de l'image élémentaire immédiatement précédente avec les points de bord observés de l'image élémentaire courante et par correction des points de bord suivis de l'image élémentaire immédiatement précédente sur la base des points de bord observés de l'image élémentaire courante (S106) ;
l'ajustement d'une courbe de bord de voie sur la base des points de bord suivis temporaires (S108) ; et
l'exclusion de points aberrants des points de bord suivis temporaires sur la base de la courbe de bord de voie, afin de former des points de bord suivis de l'image élémentaire courante, un point étant déterminé comme faisant partie des points aberrants si une distance entre le point dans les points de bord suivis temporaires et la courbe de bord de voie est supérieure à une valeur prédéfinie (S110),
dans lequel des points de bord suivis d'une première image élémentaire de la séquence d'images de bord sont des points de bord observés de la première image élémentaire,
dans lequel l'obtention de points de bord suivis temporaires de l'image élémentaire courante par prolongement des points de bord suivis de l'image élémentaire immédiatement précédente avec les points de bord observés de l'image élémentaire courante et par correction des points de bord suivis de l'image élémentaire immédiatement précédente sur la base des points de bord observés de l'image élémentaire courante (S106) comprend :
la détermination de positions courantes des points de bord suivis de l'image élémentaire immédiatement précédente et des points de bord observés de l'image élémentaire courante dans le système de coordonnées rectangulaires du véhicule ;
le prolongement, dans le système de coordonnées rectangulaires du véhicule, d'une partie non coïncidente des points de bord observés de l'image élémentaire courante et des points de bord suivis de l'image élémentaire immédiatement précédente, afin d'obtenir une partie des points de bord suivis temporaires ;
la transposition d'une partie coïncidente des points de bord observés de l'image élémentaire courante et des points de bord suivis de l'image élémentaire immédiatement précédente dans le système de coordonnées polaires du véhicule, et la correction des points de bord suivis de l'image élémentaire immédiatement précédente à l'aide des points de bord observés de l'image élémentaire courante dans la partie coïncidente, afin d'obtenir une partie restante des points de bord suivis temporaires ; la transposition de la partie restante des points de bord suivis temporaires dans le système de coordonnées rectangulaires du véhicule ; et
la combinaison de la partie des points de bord suivis temporaires et de la partie restante des points de bord suivis temporaires afin de former les points de bord suivis temporaires.

2. Procédé (10) selon la revendication 1, dans lequel la détermination de positions courantes des points de bord suivis de l'image élémentaire immédiatement précédente dans le système de coordonnées rectangulaires du véhicule comprend : la détermination des positions courantes des points de bord suivis de l'image élémentaire immédiatement précédente sur la base d'une vitesse et d'un angle de lacet d'un véhicule et d'un écart temporel entre l'image élémentaire immédiatement précédente et l'image élémentaire courante.

3. Procédé (10) selon la revendication 1 ou 2, dans lequel, lorsqu'un angle d'orientation d'un premier point dans les points de bord suivis de l'image élémentaire immédiatement précédente par rapport aux coordonnées polaires dans le système de coordonnées polaires du véhicule est compris entre des angles d'orientation d'un deuxième point et d'un troisième point des points de bord observés de l'image élémentaire courante par rapport aux coordonnées polaires dans le système de coordonnées polaires du véhicule,
une interpolation linéaire est réalisée à l'aide de distances radiales du deuxième point et du troisième point, afin d'obtenir une distance radiale d'un quatrième point qui correspond à l'angle d'orientation du premier point par rapport aux coordonnées polaires dans le système de coordonnées polaires du véhicule ; et
une distance radiale du premier point est corrigée au moyen d'un filtrage basé sur la distance radiale du premier point et la distance radiale du quatrième point.

4. Procédé (10) selon la revendication 3, dans lequel la courbe de bord de voie est ajustée au moyen d'une méthode des moindres carrés sur la base des points de bord suivis temporaires ; et
le quatrième point est déterminé comme faisant partie des points aberrants si une distance entre le quatrième point dans les points de bord suivis temporaires et la courbe de bord de voie est supérieure à une valeur prédéfinie.

5. Support de stockage lisible par ordinateur stockant des instructions qui, lorsqu'elles sont exécutées par un processeur, amènent le processeur à réaliser un procédé d'extraction de bords de voie, **caractérisé en ce que** le procédé, de préférence le procédé (10) selon l'une quelconque des revendications précédentes, comprend :
la réception de points de bord suivis, relatifs à des bords de voie, d'une image élémentaire immédiatement précédente d'une séquence d'images de bord (S102) ;
la détermination de points de bord observés, relatifs aux bords de voie, d'une image élémentaire courante de la séquence d'images de bord (S104) ;
l'obtention de points de bord suivis temporaires de l'image élémentaire courante par prolongement des points de bord suivis de l'image élémentaire immédiatement précédente avec les points de bord observés de l'image élémentaire courante et par correction des points de bord suivis de l'image élémentaire immédiatement précédente sur la base des points de bord observés de l'image élémentaire courante (S106) ;
l'ajustement d'une courbe de bord de voie sur la base des points de bord suivis temporaires (S108) ; et
l'exclusion de points aberrants des points de bord suivis temporaires sur la base de la courbe de bord de voie, afin de former des points de bord suivis de l'image élémentaire courante, un point étant déterminé comme faisant partie des points aberrants si une distance entre le point dans les points de bord suivis temporaires et la courbe de bord de voie est supérieure à une valeur prédéfinie (S110),
dans lequel des points de bord suivis d'une première image élémentaire de la séquence d'images de bord sont des points de bord observés de la première image élémentaire.

6. Appareil (20) d'extraction de bords de voie, **caractérisé en ce qu'**il comprend :
un appareil d'obtention d'images (202) configuré pour obtenir une séquences d'images de bord ;
un appareil de calcul (204) configuré pour :
recevoir des points de bord suivis, relatifs à des bords de voie, d'une image élémentaire immédiatement précédente d'une séquence d'images de bord ;
déterminer des points de bord observés, relatifs aux bords de voie, d'une image élémentaire courante de la séquence d'images de bord ;
obtenir des points de bord suivis temporaires de l'image élémentaire courante en prolongeant les points de bord suivis de l'image élémentaire immédiatement précédente avec les points de bord observés de l'image élémentaire courante et en corrigeant les points de bord suivis de l'image élémentaire immédiatement précédente sur la base des points de bord observés de l'image élémentaire courante ;
ajuster une courbe de bord de voie sur la base des points de bord suivis temporaires ; et
exclure des points aberrants des points de bord suivis temporaires sur la base de la courbe de bord de voie, afin de former des points de bord suivis de l'image élémentaire courante, un point étant déterminé comme faisant partie des points aberrants si une distance entre le point dans les points de bord suivis temporaires et la courbe de bord de voie est supérieure à une valeur prédéfinie,
dans lequel des points de bord suivis d'une première image élémentaire de la séquence d'images de bord sont des points de bord observés de la première image élémentaire ; et
une unité de génération de bord (206) configurée pour fournir la courbe de bord de voie, l'appareil de calcul (204) étant configuré pour :
déterminer des positions courantes des points de bord suivis de l'image élémentaire immédiatement précédente et des points de bord observés de l'image élémentaire courante dans le système de coordonnées rectangulaires du véhicule ;
prolonger, dans le système de coordonnées rectangulaires du véhicule, une partie non coïncidente des points de bord observés de l'image élémentaire courante et des points de bord suivis de l'image élémentaire immédiatement précédente, afin d'obtenir une partie des points de bord suivis temporaires ;
transposer une partie coïncidente des points de bord observés de l'image élémentaire courante et des points de bord suivis de l'image élémentaire immédiatement précédente dans le système de coordonnées polaires du véhicule, et corriger les points de bord suivis de l'image élémentaire immédiatement précédente à l'aide des points de bord observés de l'image élémentaire courante dans la partie coïncidente, afin d'obtenir une partie restante des points de bord suivis temporaires ;
transposer la partie restante des points de bord suivis temporaires dans le système de coordonnées rectangulaires du véhicule ; et
combiner la partie des points de bord suivis temporaires et la partie restante des points de bord suivis temporaires afin de former les points de bord suivis temporaires.

7. Système de conduite autonome, le système de conduite autonome étant **caractérisé en ce qu'**il comprend l'appareil (20) d'extraction de bords de voie selon la revendication 6.

8. Véhicule, le véhicule étant **caractérisé en ce qu'**il comprend l'appareil (20) d'extraction de bords de voie selon la revendication 6 ou le système de conduite autonome selon la revendication 7.
